Europäisches Patentamt

European Patent Office

Office européen des brevets

(11) Publication number: **0 461 709 A1**

# EUROPEAN PATENT APPLICATION

(21) Application number: **91201390.1**

(22) Date of filing: **06.06.91**

(51) Int. Cl.⁵: **B60R 9/042**

(30) Priority: **12.06.90 BE 9000590**

(43) Date of publication of application:
**18.12.91 Bulletin 91/51**

(84) Designated Contracting States:
**BE DE FR GB IT NL**

(71) Applicant: **Van Briel, Herman**
**Achterstraat 42**
**B-3573 Peer(BE)**

(72) Inventor: **Van Briel, Herman**
**Achterstraat 42**
**B-3573 Peer(BE)**

(74) Representative: **Callewaert, Jean**
**Bureau Callewaert, Brusselse steenweg 108**
**B-3090 Overijse(BE)**

(54) **Device for loading and transporting loads on vehicle tops.**

(57) Loading and transporting device for preferably oblong objects (10) which is destined to be mounted on a vehicle (3), having an arm (7) rotating around an axis (4) and on the free end (8) of the latter a hinged loading carriage (11), the axis (4) being operated by a lever (12) which allows the arm (7) to rotate between a loading position and a transport position.

FIG.1.

The invention relates to a load and transport device preferably for oblong objects, such as ladders, tubes, panels and the like, which are to be mounted on a vehicle, such as above the loading space of a lorry.

For transport by means of a vehicle of objects of which the length is such that they cannot be stowed in the loading space of the vehicle, nowadays usually a roof rack is used which is mounted on to of the roof of the vehicle.

If, however, the roof of the vehicle is relatively high and/or the objects to be transported are relatively heavy or take up much space, important problems not to be underestimated can occur for loading and unloading these objects, concerning safety, necessary effort and skill of the people who are responsible for this, as well as the risk for damaging the vehicle and/or the objects concerned. Furthermore, this can take much time and often merely for loading and unloading extra personnel is needed, especially thus if it concerns relatively heavy and/or voluminous objects, as is the case for certain extendible ladders.

The invention mainly has as its aim to remedy in a very efficient way these different disadvantages by proposing a load and transport device which is relatively simple and easy to operate and which can be mounted possibly substantially in the same way as a classic roof rack on substantially all vehicles.

To this aim the load and transport device has, according to the invention, at least one arm which is rotatable around a substantially horizontal axis of rotation, with at the free end of the latter means for fixing at least one of said objects detachably and hingedly to an axis substantially parallel to said rotation axis, operation controls being provided for rotating said arm around its rotation axis between, on the one hand, a loading position, in which the free end of the arm is positioned in such a way that the concerned object can be fixed detached with respect to this free end from a spot next to the vehicle, onto which the device is mounted, and, on the other hand, a transport position, in which the free end of the arm is positioned in such a way above the vehicle, that the object in its turn, through hinging around this free end of the arm, is placed in a spot suited for transport.

Advantageously, in said loading position, the free end of the arm is at one side of the vertical plane of the rotation axis and, in said transport position, this free end is at the opposite side of the vertical plane.

In a particular embodiment of the invention said means for fixing said object to the free end of the arm have a bearing carriage mounted hingedly to an axis substantially parallel to said rotation axis, onto which said object can be fixed detachably.

Other advantages and particulars of the invention will become apparent in the description following hereafter of several specific embodiments of the invention; reference numbers used hereafter relate to the figures presented hereafter.

Figure 1 is a schematic perspective view of a first embodiment of the load and transport device, according to the invention, which is mounted on the roof of a relatively high lorry and is in loading position.

Figure 2 is a somewhat analogous representation of the same embodiment in an intermediate stage between loading position and transport position.

Figure 3 is also a somewhat analogous representation of the same embodiment in transport position.

Figure 4 is a schematic side-elevation of a second embodiment of the load and transport device, according to the invention, which is mounted on the roof of a relatively low lorry and is in loading position.

Figure 5 is part of a schematic rear view of the lorry represented in figure 4 with the load and transport device also in loading position.

Figure 6 is a schematic perspective representation of a third embodiment of the load and transport device, which is also mounted on the roof of a relatively high lorry and which is in an intermediate stage between loading position and transport position.

Figure 7 is a schematic side-elevation of a fourth embodiment of the load and transport device, according to the invention, which is mounted on a small lorry.

In these different figures the same reference numbers relate to the same or to analogous elements.

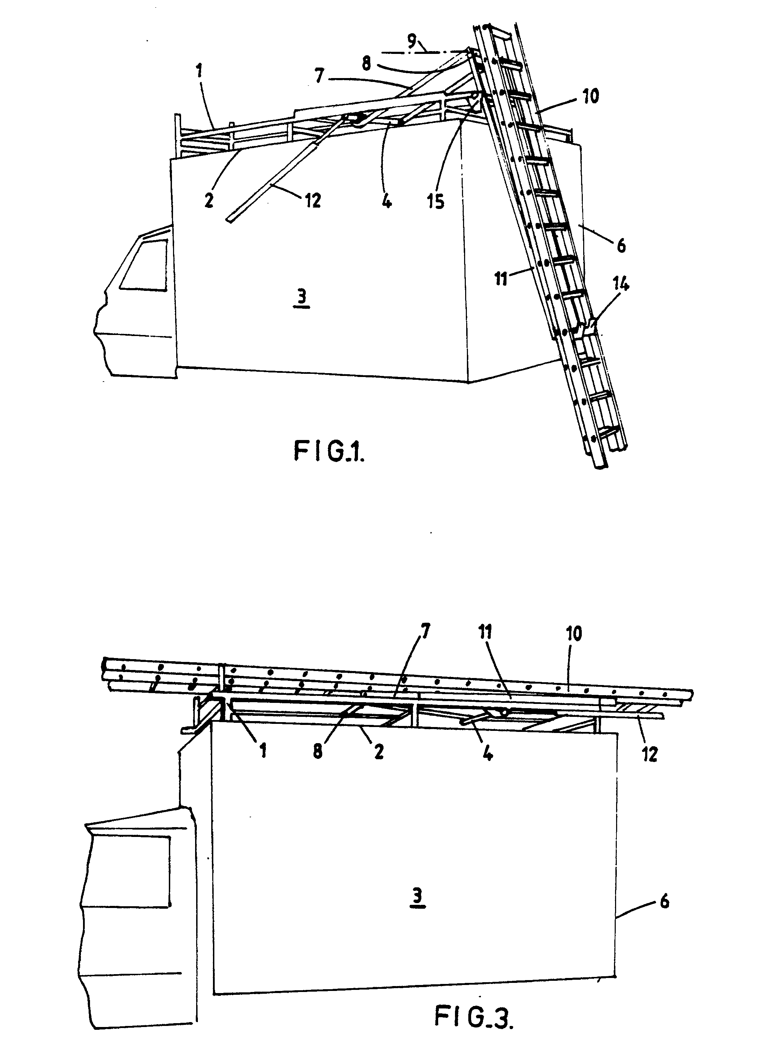

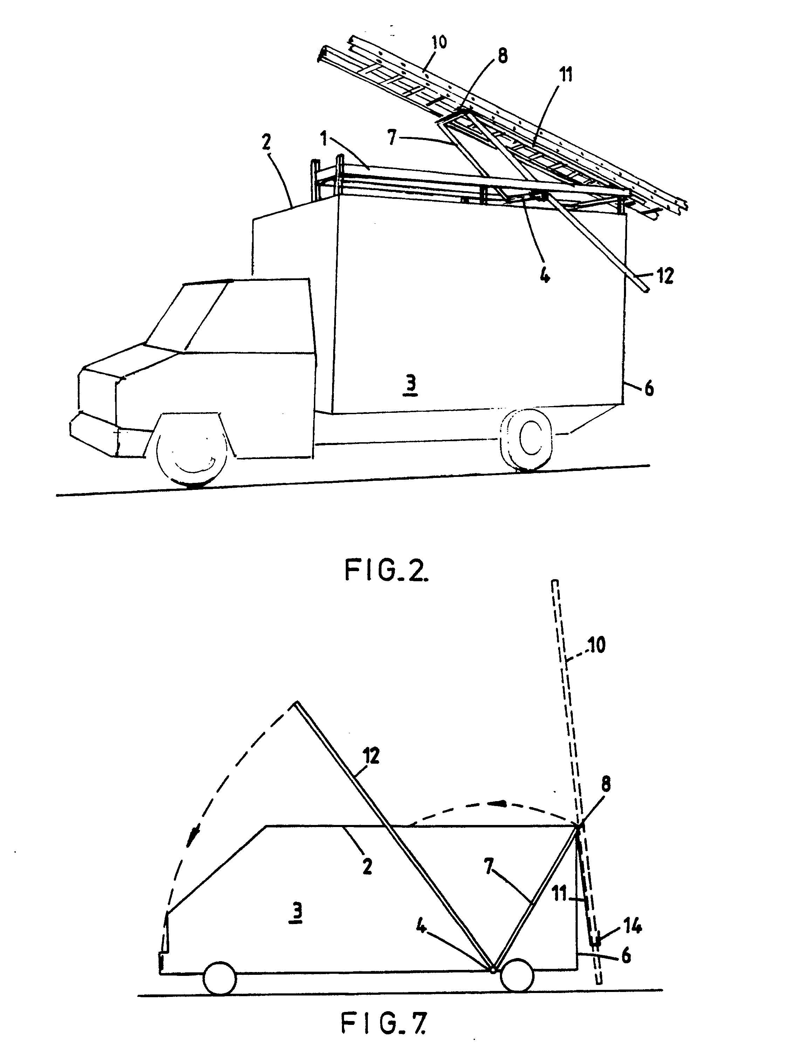

In general the embodiments of the load and transport device represented in figures 1 to 6 have a support 1 which is fixed substantially in the same way as a classic roof rack to the roof 2 of a lorry 3. This support preferably extends over substantially the entire surface of this roof 2, such that the loading surface is maximum. Further on this support 1 an axis 4 is provided which extends over a certain distance of the rear 6 of the lorry 3 perpendicularly on the longitudinal axis of the latter. On this axis 4 an arm 7 is mounted rotarily. Further on the free end 8 of this arm 7 means have been provided for fixing detachably and hingedly around an axis 9 parallel to a rotation axis 4 of preferably oblong objects 10, such as a ladder, a pair of tubes, panels, etc., which have to be loaded and fixed on top of the lorry 3.

In the specific embodiments represented in figure 1 to 6 these means mainly consist of a bearing carriage 11, which is linked up hingedly around the axis 9 to the free end 8 of the arm 7 and onto which said objects 10 can be fixed detachably.

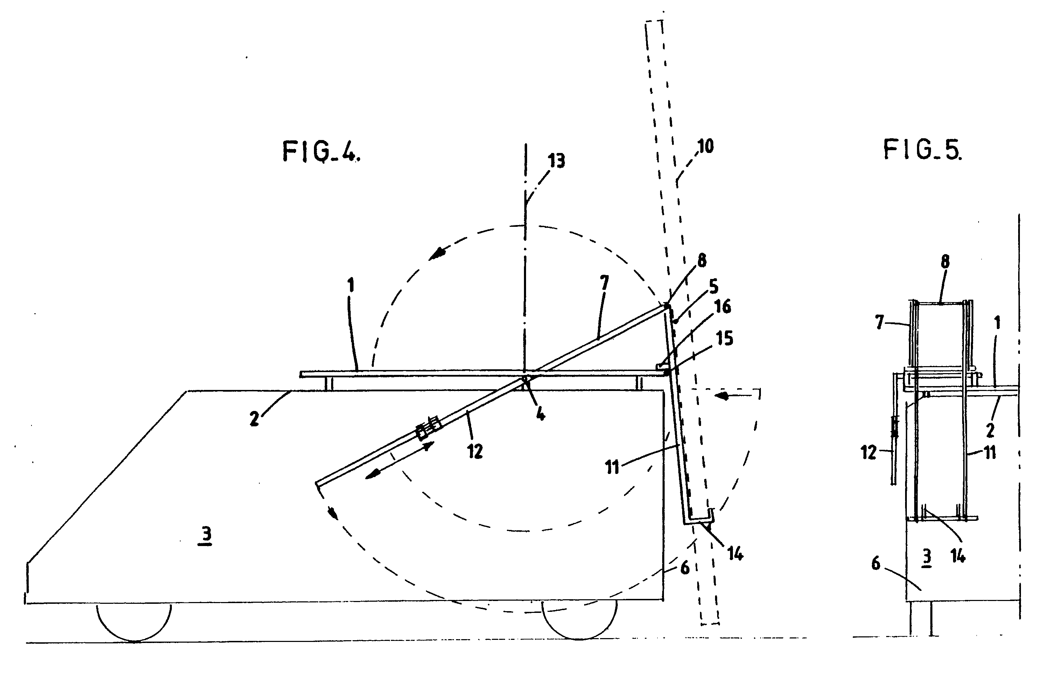

Further, always in this specific embodiment, operating devices consisting of a lever 12 have been provided to rotate the arm 7 around an axis 4 between, on the one hand, a loading position, such as represented in figure 1 and, on the other hand, a transport position, as represented in figure 3. Since the loading position is the same as the one for unloading the concerned objects in this description reference is made only to the "loading position", which is thus the same as the "unloading positon". This lever 12 can be moved sideways with reference to the lorry 3 between the loading positon and the transport position. In certain cases, if the lever is too long and if it would protrude too much in transport position at the back of the lorry, then it can be mounted detachably on the axis 4, it can be folding or be telescopically executed.

This can be the case for instance when the device is to be mounted on a small lorry, as represented in figures 4 and 5. In these figures a telescopic lever is represented.

In transport position the free end 8 of the arm 7 lies in such a way on the roof of the vehicle that the concerned object 10 is placed in a spot suitable for transport on this vehicle.

Usually it is the case that in transport position the object to be conveyed 10, such as a ladder, simply rests on the support 1, in the same manner as on a classic roof rack. In this position it would be possible, if necessary, to block the lever 12, to avoid that, during transport the object is lifted under influence of the wind. Such blocking system was however not represented in the figures.

As is more particularly clear from figure 4, in the represented embodiment, the free end 8 of the arm 7 is, in loading position, at the back side of the vertical plane 13 of the rotation axis 4 and, in transport position, at the opposite front side of this plane 13.

The arm 7 is preferably formed by a rectangular framework fortified or not fortified by means of cross-beams, of which one of the sides is mounted rotatively around the rotation axis 4 and the opposite side forms the free end 8, onto which either the concerned object is fixed directly hingedly and detachably, or the bearing carriage 11 is fixed hingedly. Only the latter embodiment was represented in the figures.

Usually also the bearing carriage 11 consists of a rectangular framework which for instance, as represented in the figures, is executed rather in the form of a short ladder, i.e. with two longitudinal girders which are mutually connected at regular intervals by means of cross-beams. The width of this framework corresponds to the length of the side of the framework which determines the free end 8 of the arm 7, while one of the ends of both longitudinal girders of the bearing carriage 11 is linked up hingedly to this free end.

In the vicinity of the other end of these longitudinal girders a support 14 is provided for the object 10 to be cinveyed, which allows to lift the latter by means of the bearing carriage 11, from loading position to transport position. By means of straps or ropes, for instance, the object can be fixed detachably on this bearing carriage, in the same manner as on a classic roof rack, with the important advantage however that this occurs in the loading position, so at the time the bearing carriage with the object is in a spot easily accessible next to the lorry. This is an important difference with respect to the classic roof rack where fastening the object to be transported has to occur on top of the lorry and for which often a separate ladder is needed which is mounted fixed against the side of the lorry.

If necessary on the bearing carriage 11 at the object suitable fastening means can be provided. Hence it is for instance possible that for a bearing carriage which is destined for transport of a ladder, the support 14 can consist of two hooks onto which one of the rungs of the ladder rests and a sort of clipping system can enclose in one or several spots either the stands or the rungs of the ladder elastically. Such a clipping system was not represented in the figures.

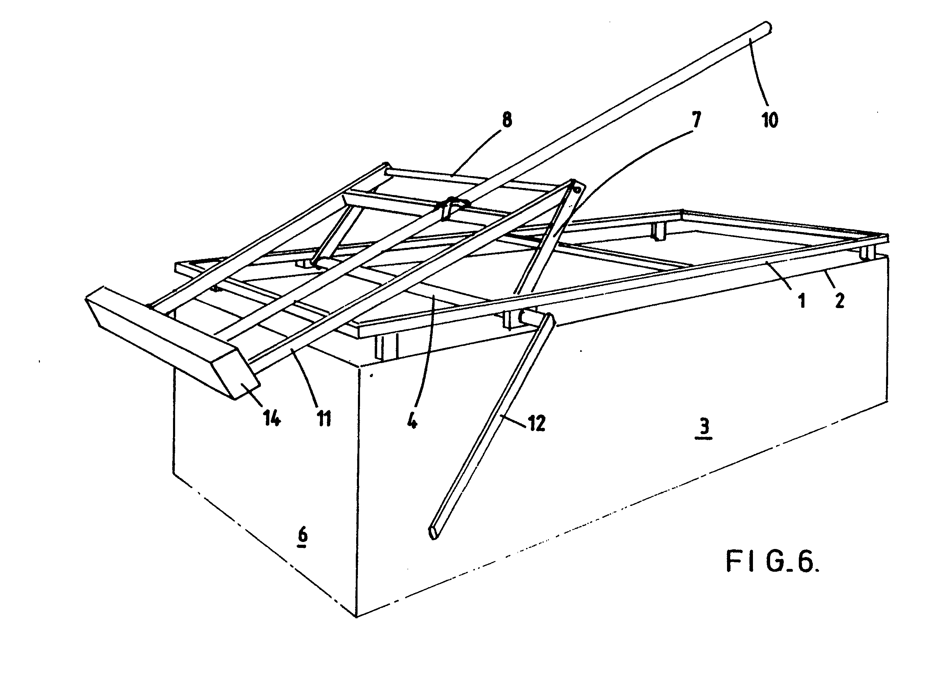

In another embodiment, such as for example represented in figure 6, the support is formed by a bin 14 in which various oblong objects, such as tubes, panels, etc., can be placed in loading position. For the sake of illustration, in figure 6 a tube 10 is represented of which one end is in the bin 14 and which is fastened onto a cross-beam of the bearing carriage 11 by means of a strap 17.

At the back of the support 1 a guide 15 is provided in which the longitudinal girders of the bearing carriage 11 can slide at the time of the transition from loading position to transport position and vice versa. In the embodiment according to figures 4 and 5 this guide 15 consists of a horizontal roller which can rotate around its axis.

In particular for transport of long objects, such as ladders and tubes, it can be very useful that, in this loading position, the arm 7 is kept in such a way that the free end 8 thereof is in a spot more or less above the centre of gravity 5 of an object fixed with respect to this free end and that the bearing carriage 11 preferably extends in a somewhat slanting position, such as is clear from figures 1 and 4. In this manner it is taken care of that the object 10 can rest free in a steady position against the bearing carriage and hence it is avoided, when such an object is fixed on the bearing carriage 11 in loading position, that this object could freely topple around the axis 9, where the bearing carriage 11 is linked up hingedly to the free end 8 of the arm 7.

Thus it can be required that, for relatively low vehicles 3, as represented in figures 4 and 5, certain precautions are taken and that the rotation of the arm 7 from its usually horizontal transport position to its loading position is limited to an angle smaller than 180°, as represented in figure 4, and thereto for example use should be made of a distance keeping device 16. This distance keeping device 16 takes care that, when the arm 7 is in loading position, the free end 8 of the arm 7 is kept at a certain distance of the support. In the embodiment according to the figure 4 the distance keeping device 16 simply consists of a horizonatl slat which is fixed at the back on the bearing carriage 11 at a certain distance of the free end 8 of the arm 7 and rests in loading position on the rear of the support 1. Beside if necessary this slat can be fixed at an adjustable distance on the bearing carriage.

In certain cases the distance keeping device can be fixed on the lower par of the arm 7 and the height can be adjustable by using for example telescopic tubes. Also it could, in stead of being mounted on the arm 7, be mounted on the support 1 and be used as support of the arm in loading position.

The distance from the free end 8 of the arm 7 to the rotation axis 4 of the latter usually corresponds substantially to halfway up the height H onto which the axis 4 is placed when the device is mounted on the lorry 2. This distance is furthermore preferably the same or slightly bigger than the distance from the axis to the rear rim of the support 1. However it is also possible that this distance is slightly smaller than the one of the axis 4 to said rear rim. This has as a consequence that in loading position the arm 7 cannot lie totally horizontally, but, a.o. depending on the weight of the bearing carriage 11, always forms a sharp angle with the support 1 such that thus automatically the bearing carriage 11 also remains hanging slanting, as was for example represented in figure 1.

It is however possible that, both in loading position as in transport position, the arm 7 rests horizontally on the support 1, such that between both positions the arm 7 goest through a rotation of 180°. Beside it is also possible that, in particular with relatively long objects 10, in loading position the lever 12 is blocked in a particular position, such that the free end 8 of the arm is kept at a certain height above the support 1 when fixing it to the bearing carriage 11.

If for example it is the purpose to transport by means of the device, accoridng to the invention, only ladders, then preferably the width of the framework, of which both the arm 7 and the bearing carriage 11 consist, is adapted to the width of the ladders, as is clear from the figures 1 to 5. Hence, if the lorry 3 used thereto is sufficiently wide, onto the support 1, which takes up substantially the entire width of the latter, in the vicinity of each of the longitudinal sides of the support 1, an axis 4 can be provided, of which the length is substantially the same to the width of the framework of an arm and on each of both these axes a separate arm 7 can be mounted rotatively.

In certain cases room can be left between these two axes, which can be used as a normal roof rack and on which if need be a third ladder can be fastened. For placing this third ladder use can be made of the other ladders, when they are in loading position on a bearing carriage 11.

Of course it is possible, if this free room is sufficiently wide, to provide there too an axis with an arm which can be rotated around the latter, the axis preferably extending to one of the longitudinal sides of the support 1 also operationally be means of a lever.

The embodiment represented in figure 7 of the load and transport device is distinguished from the former mainly in the position of the rotation axis 4, such that the arm 7 consists of a frame which extends around the loading space of the lorry. In this embodiment the above described support 1 was left out and on the roof for example not represented separate supports can be placed at the front and rear of the roof 2.

Finally it should be noted that the invention is by no means limited to the embodiments described above and represented in the figures, such that within the framework of this invention several changes can be considered, a.o. concerning the construction of the different component parts of the load and transport device and the operation of the axis 4. Hence this axis can for example be driven by means of an electric, pneumatic or hydraulic engine.

Possibly in certain cases, the bearing carriage 11 can be left out such that the object to be transported can directly be fixed hingedly on the free end 8 of the arm 7. Such an embodiment could possibly be used for transport of ladders which are not too long, such that there is no danger of toppling of the ladder in loading position. Also the bearing carriage 11 could consist of an entirely lockable trunk in which the object to be transported can be stowed away in said loading position. In this case of course, the objects to be transported do not necessarily have to be elongated but they can, in principle, have a wide variety of forms and sizes. It is thus also in this sense that the expression "fixing detachably of the objects to be transported" should be interpreted. If need be, the axis 4 could be fixed directly on the roof of the lorry, if it is practically feasible, in stead of on an autonomous support 1 mounted detachably or not detachably on the roof. In this case the possibly provided guides 15 would have to be provided on the roof 2 directly as well and they could be used during transportation as support for the object 10 to be transported.

Further, according to the invention, particularly for loading and transporting heavy objects, means could be provided, such as springs, shock absorbers and the like, which allow, both with the transition from loading position to transport position as vice versa, to brake somewhat the movement of the arm 7 before one of these positions is reached.

## Claims

1. Load and transport device for preferably oblong objects (10), such as ladders, tubes, panels and the like, which is destined to be mounted on a vehicle (3), characterized in that this device has at least one arm (7) rotatively around a substantially horizontal rotation axis (4) with at the free end (8) of the latter means (11) for fixing detachably and hingedly around an axis (9) substantially parallel to said rotation axis (4) of at least one of said objects (10), operating means (12) being provided for rotating said arm (7) around its rotation axis (4) between on the one hand, a loading position, in which the free end (8) of the arm (7) is positioned in such a way that the concerned object (10) with respect to this free end (8) is fixed detachably from a spot next to the vehicle (3), on which the device is mounted, and on the other hand, a transport position, in which the free end (8) of the arm (7) is positioned in such a way above the vehicle (3), that the object (10) in its turn, by rotating around this free end (8) of the arm (7), is in a spot suitable for transport.

2. Device according to claim 1, characterized in that, in said loading position, the free end (8) of the arm (7) is at one side of the vertical plane (13) of the rotation axis (4) and, in said transport position, this free and (8) is at the opposite side of this vertical plane (13).

3. Device according to claim 1 or 2, characterized in that said operating means for the rotation axis (4) show a lever (12) which is fixed to one of the free ends (8) of this axis (4) and which extends substantially perpendicularly with respect to the latter.

4. Device according to claim 3, characterized in that said lever (12) is detachable, telescopic and/or folding.

5. Device according to any one of the claims 2 to 4, characterized in that said means (11) for fixing said object (10) to the free end (8) of the arm (7), show a bearing carriage (11) mounted hingedly to an axis (9) substantially parallel to said rotation axis (4) onto which the concerned object (10) can be fixed detachably.

6. Device according to any one of the claims 1 to 5, characterized in that the arm (7) is formed by a substantially rectangular framework of which one of the sides is mounted rotatively around said rotation axis (4) and the opposite side forms said free end (8) on which the concerned object (10) can be mounted detachably directly or indirectly.

7. Device according to claim 5 or 6, characterized in that said bearing carriage (11) comprises also a substantially rectangular framework of which the length of the side which is joined hingedly to said arm (7), is substantially the same to the length of the side of the framework which sets the free end (8) of this arm (7).

8. Device according to any one of the claims 5 to 7, characterized in that in the vicinity of the side of the bearing carriage (11) which lies opposite from the one which is joined hingedly to the free end (8) of the arm (7) a support (14) is provided for said object (10) which allows to take the latter by means of this bearing carriage (11) from said loading position to transport position.

9. Device according to claim 8, characterized in that, when e.g. said object (10) is formed by a ladder, the support is formed by hooks (14) which can catch under one or certain rungs of the ladder.

10. Device according to claim 8, characterized in that, when e.g. said object (10) is formed by a ladder, the support is formed by a low bin, open at the top, in which said object (10) can be placed during the detachably fixing onto the bearing carriage (11).

11. Device according to any one of the claims 1 to 10, characterized in that a guide (15) is provided in the vicinity of the free end (8) of said arm (7) when it is in loading position, such that at the lifting of the object (10) to transport position the latter or the bearing carriage (11) on which the object (10) is resting, slides over said guide (15).

12. Device according to any one of the claims 1 to 11, characterized in that, in transport position, the arm (7) extends substantially horizontally and forms a support for said object (10) which is in this position.

13. Device according to any one of the claims 1 to 12, characterized in that, in loading position the arm (7) is kept in such a way that the free end (8) of it is at a spot above the point of gravity of an object (10) fixed with respect to this free end (8).

14. Device according to claim 13, characterized in that the arm (7) is provided with an adjustable or not adjustable distance keeping device (16) which allows, when the arm (7) is in loading position, to fix said object (10) in such a way with respect to the free end (8) of this arm (7) that the point of gravity (5) of this object (10) is above this free end (8).

15. Device according to any one of the claims 1 to 14, characterized in that the distance from the free end (8) of the arm (7) to the rotation axis (4) of the latter corresponds substantially with half of the height (H) on which this axis (4) is placed when the device is mounted on a vehicle (3).

16. Device according to any one of the claims 1 to 15, characterized in that said rotation axis (4) is provided on a substantially horizontal support (1) which can be mounted on top of a vehicle (3).

17. Device according to any one of the claims 1 to 16, characterized in that it comprises several arms (7) which can be operated separately with respect to one another, onto the free end (8) of each of these one or or more objects (10) can be fixed hingedly and detachably.

18. Lorry with a closed loading space, a load and transport device according to any one of the preceding claims being mounted on top of this loading space.

FIG.1.

FIG.3.

7

FIG.2.

FIG.7.

FIG.4.

FIG.5.

EP 0 461 709 A1

FIG.6.

EP 0 461 709 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | WO-A-8 903 324 (BLEY;JABLONSKY)<br>* abstract; figures * | 1,2,5-8,<br>13,16,11 | B 60 R 9/042 |
| A,Y | FR-A-2 600 954 (ATELIERS SIBILLE ET CIE)<br>* page 8, line 5 - page 10, line 2; figures * | 1-5,8-10,<br>13,16,18,<br>11 | |
| X | DE-U-8 713 470 (BLEY;JABLONSKY)<br>* the whole document * | 1,2,5-7,<br>16 | |
| X | WO-A-8 302 755 (RAMBERG)<br>* the whole document * | 1,2,5,8,<br>12,13,16 | |
| X | US-A-4 858 725 (GRIFFIN)<br>* the whole document * | 1,6,18 | |

TECHNICAL FIELDS
SEARCHED (Int. Cl.5)

B 60 R

The present search report has been drawn up for all claims

| Place of search | Date of completion of search | Examiner |
|---|---|---|
| The Hague | 17 September 91 | DUBOIS B.F.J. |